# FASCICULE DE BREVET EUROPEEN

(11) **EP 1 932 004 B1**
(45) Date de publication et mention de la délivrance du brevet: **04.07.2018**
(21) Numéro de dépôt: 06806947.5
(22) Date de dépôt: 03.10.2006
(51) Int. Cl.: G01S 3/04, G01S 3/46, G01S 3/72

(54) **DISPOSITIF COMPACT DE RADIO SURVEILLANCE**
KOMPAKT-FUNK-ÜBERWACHUNG
COMPACT RADIO MONITORING

(30) Priorité: 03.10.2005 FR 0510077
(43) Date de publication de la demande: 18.06.2008
(73) Titulaire: THALES, 92400 Courbevoie (FR); Batardon, Thierry, 92400 Courbevoie (FR)
(72) Inventeur: BABE, Christophe, F-95210 Saint Gratien (FR); FUCHE, Loïc, F-49360 Maulevrier (FR)
(74) Mandataire: Lucas, Laurent Jacques
(86) Numéro de dépôt international: PCT/EP2006/067006
(87) Numéro de publication internationale: WO 2007/039610

(56) Documents cités:
- EP-A- 1 316 876
- EP-B- 0 867 079
- WO-A-99/04588
- WO-A2-2005/013661
- DE-A1- 10 154 878
- FR-A1- 2 460 590
- US-A- 5 870 430
- US-A- 6 028 769

## Description

### DOMAINE DE L'INVENTION

L'invention concerne le domaine de la surveillance des émissions HF, VHF et UHF par voie hertzienne, ces émissions pouvant être aussi bien produites par des équipements de radio diffusion. Elle se rapporte plus particulièrement au domaine des mesures de spectre et des mesures goniométriques destinées notamment à contrôler le spectre des ondes émises dans une zone donnée et à déterminer le cas échéant la localisation d'une source ne respectant pas, pour diverses raisons, les normes relatives à l'émission d'un signal radioélectrique dans une zone donnée.

### CONTEXTE DE L'INVENTION - ART ANTERIEUR

La radio surveillance consiste très généralement à contrôler sur une zone déterminée la présence et la position des sources d'émission dans la zone, à contrôler la qualité du spectre des signaux émis et dans le cas d'émissions ne correspondant pas aux normes établies par les autorités compétentes, à déterminer la localisation des sources correspondantes. Dans ce contexte on s'intéresse en particulier à toutes les émissions connues ou inconnues, ou à celles qui, en cas de disfonctionnement peuvent constituer une pollution pour les émissions environnantes.

Pour effectuer de tâches de contrôle du spectre des émissions réalisées dans une zone donnée, il est connu d'utiliser des équipements autonomes séparés. Ces équipements comportent principalement des moyens de réception et des moyens d'analyse spectrale. Ces moyens traitent les signaux captés par une antenne juchée sur un mât, le gain de l'antenne, ainsi que la longueur du mât, étant fonction des performances de détection que l'on recherche. L'analyse spectrale est par ailleurs généralement réalisée sur une bande étroite, correspondant par exemple à la bande passante des moyens de réception. De la sorte, pour effectuer l'exploration d'une bande de fréquences large il est nécessaire de répéter plusieurs fois l'analyse en déplaçant la bande passante du récepteur à l'intérieur de la bande de fréquence à analyser. Les moyens d'analyse spectrale consistent généralement dans un appareil de mesure tel qu'un analyseur de spectre permettant de déterminer l'amplitude et la largeur de chaque composante spectrale présente dans la bande analysée.

De même dans le domaine de la localisation de sources en infraction avec la réglementation, on met en oeuvre des mesures goniométriques permettant de déterminer à l'aide d'équipements connus la direction d'arrivée de l'onde émise. Le principe de fonctionnement de ces équipements est classiquement basé sur des mesures interférométriques de phase (ou d'amplitude) effectuées sur les signaux reçus par une antenne constituée de plusieurs dipôles. Ces mesures goniométriques peuvent par ailleurs être effectuées en différents points, de façon à effectuer par triangulation la localisation de la source.

Pour remplir l'ensemble des missions relatives à la radio surveillance, il faut donc pouvoir disposer à la fois d'équipements d'analyse spectrale, et d'équipements de goniométrie. Or, en l'état actuel de l'art, ces deux types de fonctions sont généralement remplis par des équipements indépendants, eux-mêmes composés d'éléments séparés conditionnés dans des tiroirs (ou "racks" selon la dénomination anglo-saxonne) ou logés sur des étagères par exemple.

Ce type de configuration présente l'avantage de bien individualiser les fonctions réalisées, de sorte que si on souhaite réaliser un équipement destiné seulement à faire de l'analyse de spectre, il est possible de sélectionner et d'intégrer à l'équipement seulement les éléments nécessaires pour remplir cette fonction. En revanche si comme c'est généralement le cas on souhaite disposer d'un système complet permettant d'effectuer l'analyse spectrale et la localisation des émissions indésirables, la construction d'un tel système à partir d'éléments indépendants conduit souvent à une structure relativement volumineuse et lourde, et par conséquent assez peu facile à transporter.

Une installation de radio surveillance comporte généralement une antenne montée sur un mât dont la longueur peut par exemple varier de quelques mètres à quelques dizaines de mètres; les moyens de réception et d'analyse spectrale étant installés dans un local technique, un abri (ou "shelter" selon la dénomination anglo-saxonne) par exemple, situé au pied du mât. Une telle structure est complétée pour les besoins de la localisation, par les moyens nécessaires à la mesure goniométrique qui peut selon les cas être installé dans le même local technique ou dans un local séparé. Une telle installation nécessite également des moyens permettant de commander les différents équipements et d'exploiter les résultats obtenus.

Dans certains cas d'utilisation, l'installation est intégrée dans une structure mobile l'ensemble des moyens nécessaires, mât d'antenne compris, devant dans ce cas être installés sur un véhicule et mis en oeuvre à partir du véhicule.

La réalisation d'un système de radio surveillance complet conformément à l'état de l'art actuel, présente ainsi un certain nombre d'inconvénients, en premier lieu desquels il faut bien entendu mentionner l'encombrement. En effet, pour réaliser un tel système, il faut utiliser un nombre important de moyens constitués de sous-ensembles indépendants (moyens de réceptions, moyens de mesures, moyens de commutation, etc..), chaque sous-ensemble comportant tous les éléments lui permettant de remplir sa fonction de manière autonome.

Les équipements actuels permettent de couvrir ce besoin, mais nécessite plusieurs équipements différents, indépendants, comportant pour la plupart des composants similaires sinon identiques. On obtient ainsi un système qui présente des redondances fonctionnellement inutiles et qui ont pour conséquence de rendre l'ensemble encombrant. Cette diversité d'éléments indépendants impose en particulier de disposer de structures mécaniques, châssis ou baies électronique par exemple, permettant d'intégrer dans un local ou dans un véhicule l'ensemble de ces éléments composant le système de radio surveillance, ainsi que les antennes associées. Elle nécessite par ailleurs la réalisation d'un câblage d'interconnexion permettant aux différents éléments d'échanger des signaux, des ordres et plus généralement des informations. Elle nécessite encore l'installation de moyens d'alimentation permettant de fournir à chaque élément l'énergie électrique sous la forme attendue, tant du point de vue de la nature continue ou alternative, que de la valeur et de la fréquence de la tension d'alimentation requise par chaque élément. Le système ainsi constitué se présente donc généralement comme un ensemble volumineux, relativement lourd et nécessitant un câblage complexe à réaliser. Tous ces facteurs peuvent rendre difficile son intégration dans un véhicule léger de type camionnette.

La réalisation selon l'état de l'art d'un tel système présente également un inconvénient en termes de gestion des différentes ressources qui constituent le système. En effet, chacun des éléments effectue la tâche qui lui est assignée d'une façon déterminée par son fonctionnement propre, de sorte que l'organe dédié à la gestion du système ne bénéficie pas d'une liberté totale de gestion du temps pour procéder de manière optimale à l'enchaînement des différentes tâches, mais doit prendre en compte, pour la réalisation de chacune des fonctions (analyse spectrale, goniométrie et localisation), les temps d'exécution des différentes tâches exécutées de manière autonome par chaque élément.

Le document WO 99/04588 concerne un procédé et un dispositif pour l'analyse des interférences dans un système de radiocommunication de type GSM.

Le document EP 0 867 079 concerne un procédé d'égalisation multi capteur pour la démodulation d'un message numérique en présence de multi trajets de propagation et de sources interférentes ou brouilleurs.

Le document EP 1 316 876 concerne le problème technique de l'utilisation d'un PC ou « computer system » dans un véhicule.

### PRESENTATION DE L'INVENTION

Un but de l'invention est de pallier les inconvénients précités et plus particulièrement de proposer une solution permettant de remplir l'ensemble des fonctions nécessaires à la radio surveillance d'une bande de fréquence large s'étendant de quelques kHz à quelques GHz. Un autre but de l'invention est de proposer une solution permettant de réaliser une gestion intégrée des différentes fonctions mises en oeuvre pour effectuer les missions de radio surveillance. Un autre but encore est de proposer une solution permettant de réaliser un système facile à installer dans des structures variées fixes ou mobiles et ne nécessitant pas d'être logé dans une infrastructure d'accueil spécifique. Un autre but encore est de proposer une solution permettant de réaliser un système portable à dos d'homme.

A cet effet l'invention a pour objet un dispositif compact de réception et de traitement pour système de radio surveillance large bande qui comporte au moins :
- deux modules récepteurs chargés de la réception des signaux V/UHF, un module récepteur chargé de la réception des signaux HF
- un module OL chargé de la synthèse des oscillateurs locaux destinés aux modules récepteurs VHF/UHF
- un module numérique comportant :
   - un sous-ensemble assurant les fonctions de numérisation des signaux délivrés par les modules de réception, à une fréquence d'échantillonnage Fₑ donnée, ainsi que l'analyse spectrale du signal reçu,
   - un sous-ensemble assurant les tâches d'acquisition de résultats ainsi que les tâches de séquencement et de gestion en temps réel des ressources constituées par les autres sous-ensembles,
- un module de commutation permettant d'aiguiller le signal reçu sur un module récepteur donné,
- un module de conversion d'énergie chargé de produire à partir d'une source de tension externe unique les tensions d'alimentation nécessaires au fonctionnement de chacun des modules,
- les modules du dispositif étant intégrés dans un unique coffret étanche, et sont agencés à l'intérieur dudit coffret de sorte que la chaleur dissipée par chacun des modules soit transmise par conduction aux parois du coffret et dissipée par convection vers l'extérieur par les parois du coffret, le refroidissement des modules étant assuré uniquement par ce moyen,
- les modules sont fixés sur les faces internes des parois du coffret étanche de façon à établir une continuité thermique entre ces modules et le coffret.

Selon une variante du mode de réalisation précédent on interpose entre la surface du module et la paroi sur laquelle il est fixé une couche de matériau bon conducteur thermique.

Selon l'invention, les parois externes des faces latérales supérieure et inférieure du coffret présente une structure en relief permettant d'augmenter la surface de dissipation.

Dans une forme de réalisation préférée, cette structure en relief est réalisée sous la forme de cannelures parallèles usinées en relief ou en creux dans l'épaisseur de la plaque.

L'invention a également pour objet un système de radio surveillance mobile comportant un dispositif compact de réception et de traitement selon l'invention, associé à une antenne déployable, constitué d'éléments rayonnants montés sur un mât télescopique, maintenu par un système de haubans.

L'invention a également pour objet un système de radio surveillance mobile comportant un dispositif compact de réception et de traitement selon l'invention, associé à une antenne constituée d'éléments rayonnants, l'ensemble étant monté sur une plateforme équipée d'un radôme, ladite plateforme étant fixée à l'extrémité d'un mât télescopique monté sur un véhicule.

L'invention a également pour objet un système de radio surveillance mobile comportant un dispositif compact de réception et de traitement selon l'invention monté sur une structure d'accueil de portage et équipé d'une antenne goniométrie.

Le dispositif selon l'invention présente l'avantage de mutualiser l'ensemble des fonctionnalités de base permettant d'effectuer les tâches qui constituent la radio surveillance : il évite ainsi les redondances inutiles et permet de réaliser les mêmes opérations que les équipements existants avec un encombrement et un poids réduits.

Avantageusement, la configuration de réception présente dans l'invention est adaptable et configurable selon le besoin. Ainsi :
- la présence d'un module récepteur V/UHF et d'un module LO permet d'accéder à la fonction d'interception et écoute technique V/UHF. L'ajout d'un deuxième module récepteur V/UHF permet d'accéder en plus à la fonction de goniométrie V/UHF,
- la présence d'une voie de réception HF permet d'accéder à la fonction d'interception et écoute technique HF. L'ajout d'un deuxième module récepteur HF permet d'accéder en plus à la fonction de goniométrie HF.

Du fait de sa compacité, le dispositif selon l'invention réduit la complexité de l'interconnexion externe du système qui se réduit avantageusement aux liaisons coaxiales entre le coffret et les antennes, au fil d'alimentation électrique et à la liaison avec le calculateur de gestion. L'intégration de l'équipement dans un local technique ou dans un véhicule se trouve ainsi facilitée. En outre du fait de son poids relativement faible et de son étanchéité, le dispositif selon l'invention peut être installé sans infrastructure d'hébergement de type abri (shelter) ou local technique. Il peut ainsi par exemple être directement fixé sur le mât portant l'antenne ou même sur la structure de l'antenne.

### DESCRIPTION DES FIGURES

D'autres caractéristiques et avantage apparaîtront clairement au travers de la description qui suit, description qui s'appuie sur les figures indexées qui représentent:
- la figure 1, un synoptique des principaux modules constituant le dispositif,
- la figure 2, une illustration d'une face du coffret mettant en évidence son caractère dissipateur,
- la figure 3, une illustration schématique d'un exemple d'arrangement des différents sous-ensembles du dispositif dans le coffret;
- la figure 4, une illustration d'un exemple d'équipement de radio surveillance comportant un dispositif selon l'invention monté directement sur le mât d'antenne,
- la figure 5, une illustration d'un exemple d'équipement de radio surveillance embarqué sur un véhicule, cet équipement comportant un mât télescopique et une antenne, le dispositif selon l'invention étant monté sous le plateau de l'antenne,
- la figure 6, une illustration d'un exemple d'équipement de radio surveillance portable à dos d'homme, cet équipement comportant une armature de portage et une antenne spécifique dédiée à cette utilisation opérationnelle.

### DESCRIPTION DETAILLEE

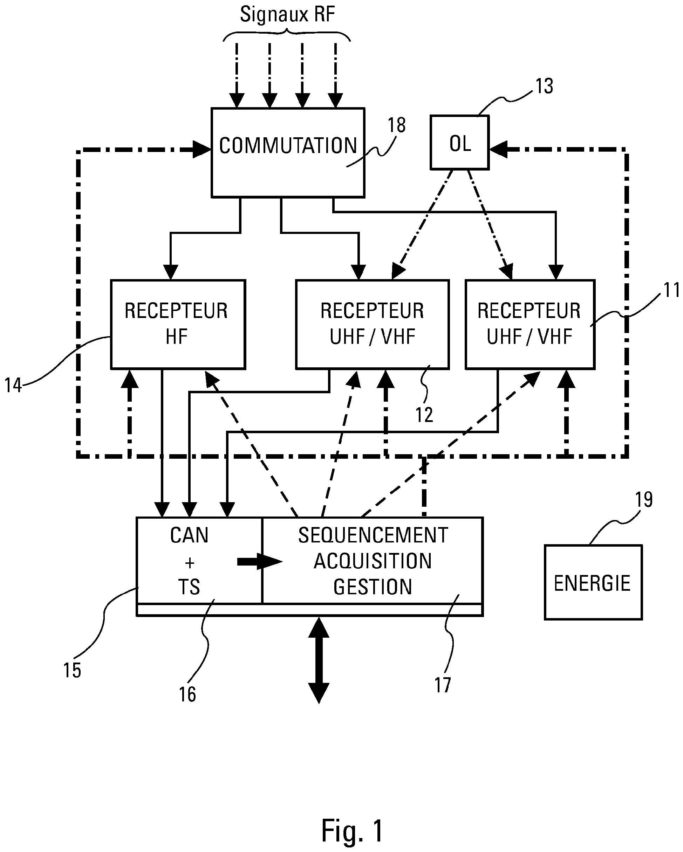

On s'intéresse dans un premier temps au synoptique fonctionnel de la figure 1 qui illustre bien les principaux avantages présentés par le coffret équipé selon l'invention. Comme l'illustre la figure ce coffret regroupe en une seule entité l'ensemble des éléments fonctionnels nécessaires à réaliser les opérations nécessaires pour assurer des fonctions de contrôle de spectre ainsi que des fonctions de goniométrie sur une très large bande de fréquences s'étendant typiquement de quelques kHz à quelques GHz. A cet effet le dispositif selon l'invention comporte principalement les modules ou sous-ensembles suivants :
- deux modules de réception V/UHF,
- un module oscillateur local (LO)
- un module de réception HF,
- un module numérique,

Le coffret selon l'invention comporte également un module d'alimentation ainsi qu'un module de commutation.

Les deux modules de réception V/UHF 11 et 12, assurent la transposition complexe (en phase et en quadrature) du signal issu de l'antenne (ou des antennes) qui équipe le système de radio surveillance et l'adaptation du niveau du signal reçu autour d'une valeur nominale (contrôle automatique de gain). La bande de réception δ₁f représente une fraction de la bande de fréquences totale, Δ₁f, couverte par le système de radio surveillance. L'exploration de la totalité de la bande VUHF couverte par le système est par ailleurs assurée en faisant varier la fréquence de l'oscillateur local fourni à chacun des modules 11 et 12 de réception par le module oscillateur local (OL) 13. La fréquence du signal OL fourni varie en fonction de la fraction de la bande passante totale explorée, de façon à permettre aux modules de réception 11 et 12 de réaliser une transposition du signal V/UHF reçu à la fréquence intermédiaire fixe FI₁.

Les deux modules de réception V/UHF ont une structure et des fonctionnalités identiques chacun des modules 11 ou 12 pouvant couvrir la totalité de la bande couverte par le système de radio surveillance. Ils peuvent ainsi être utilisés séparément dans le cadre de mesures spectrales des signaux reçus, ou bien être utilisés conjointement dans le cadre de mesures goniométriques.

De manière analogue, le module de réception HF, 14, assure la transposition complexe des signaux HF reçus autour d'une fréquence intermédiaire FI₂ fixe et l'adaptation du niveau du signal autour d'une valeur nominale (contrôle automatique de gain). La bande de réception δ₂f représente une fraction de la bande de fréquences HF totale, Δ₂f, couverte par le système de radio surveillance. L'exploration de la totalité de la bande HF couverte par le système est par ailleurs assurée en faisant varier la fréquence de l'oscillateur local interne au module de réception HF.

Une telle structure présente le double avantage de limiter la complexité des modules de réception 11, 12 et 14, et de procurer une grande souplesse d'utilisation soit pour explorer par morceaux la totalité des bandes Δ₁f et Δ₂f, soit encore pour effectuer une analyse de certaines parties de ces bandes de fréquence.

Comme l'illustre la figure, le module numérique 15 comporte quant à lui plusieurs sous-ensembles fonctionnels :
- un sous-ensemble 16 assurant les fonctions de numérisation des signaux complexes délivrés par les modules de réception, à une fréquence d'échantillonnage Fₑ donnée ainsi que l'analyse spectrale du signal reçu. Pour ce faire, il comporte des moyens, un circuit microprogrammé de type FPGA par exemple, lui permettant en particulier de réaliser des opérations de traitement de signal (TS) comme de l'acquisition, du filtrage / décimation et de la décomposition spectrale.
- un sous-ensemble 17 assurant les tâches d'acquisition de résultats et de données ainsi que les tâches de séquencement et de gestion en temps réel des ressources constituées par les autres sous-ensembles, ces tâches permettant d'utiliser ces ressources pour réaliser les fonctions opérationnelles du système de radio surveillance telles que, par exemple, des fonctions d'interception, de caractérisation, de goniométrie, ou encore d'enregistrement de données. Ce sous-ensemble 17 peut consister par exemple en un calculateur embarqué équipé de son logiciel.

Le module numérique 15 comporte enfin une carte dite "carte carrier" (non représentée sur la figure) destinée à servir de support physique aux deux cartes précédemment citées, et pouvant assurer l'interface avec l'ensemble des périphériques pouvant être associés au calculateur embarqué (disque dur, clavier / souris, Ethernet, USB, liaison série), ainsi que d'autres fonctions annexes.

Le dispositif selon l'invention comporte en outre un sous-ensemble, ou module, de commutation 18 qui peut être commandé par le calculateur embarqué de façon à connecter aux sous-ensembles récepteurs 11, 12 et 14, l'antenne ou les éléments rayonnants avec lesquels on souhaite capter un signal. Ainsi, par exemple, si la tâche à exécuter consiste en une analyse de la bande HF, le sous-ensemble de commutation 18 est configuré de façon à connecter l'entrée du module récepteur HF sur l'élément rayonnant adéquat. Le sous-ensemble de commutation permet ainsi d'aiguiller le signal reçu sur un module récepteur donné.

Le dispositif selon l'invention comporte enfin un module de conversion d'énergie 19 chargé de produire à partir d'une source de tension externe unique les tensions d'alimentation nécessaires au fonctionnement de chacun des modules..

De par sa décomposition en sous-ensembles fonctionnels et la gestion centralisé des ressources constituées par ces sous-ensembles, le coffret selon l'invention présente par rapport aux matériels existants l'avantage de pouvoir réaliser l'ensemble des fonctions assurées par un système complet de radio surveillance avec un minimum de ressources mutualisées et mise en oeuvres par un organe intelligent 15. Il présente également l'avantage, grâce à sa gestion centralisée de ressources mutualisées, d'offrir une gestion temps réelle plus souple permettant en particulier d'enchaîner de manière optimum des tâches variées dans le cadre de missions complexes de radio surveillance. Cette structure particulière permet en outre de réaliser un dispositif d'un encombrement et d'un poids sensiblement inférieurs aux équipements existants.

L'ensemble des éléments constituant le dispositif selon l'invention sont intégrés dans une structure mécanique, ou coffret, qui assure le logement des différents sous-ensembles ainsi que l'interface mécanique et connectique avec l'antenne d'une part et avec des équipements externes d'autre part. Le coffret renferme également tous les éléments de câblage qui permettent les échanges de signaux entre les différents sous-ensembles. Le synoptique de la figure 1 résume sous forme de parcours fléchés les informations et signaux échangés.

Ainsi les signaux radioélectriques provenant de l'antenne ou des antennes du système sont dirigés par le module de commutation vers les modules (sous-ensembles) récepteurs qui reçoivent également leur oscillateur local du module OL. Les signaux démodulés sont ensuite transmis au travers de liaisons appropriées au module chargé de la numérisation et du traitement lequel délivre au module calculateur les signaux numérisés et traités. Le module calculateur fournit, quant à lui, à chaque sous-ensemble les commandes et les signaux de synchronisation nécessaires pour faire fonctionner les différentes ressources de façon à réaliser une tâche de radio surveillance déterminée.

La structure du coffret renfermant les différents éléments du dispositif est constituée de manière classique de six faces, une face avant, une face arrière, une face supérieure, une face inférieure et deux faces latérales. Une caractéristique du coffret est que les six faces sont assemblées, soit directement les unes avec les autres soit par l'intermédiaire d'une armature, de façon à former un coffret compact et étanche. Ainsi conditionné, le dispositif selon l'invention peut avantageusement être utilisé dans un environnement atmosphérique non contrôlé, un local quelconque ou un véhicule par exemple, et peut même être mis en oeuvre à l'air libre, posé à terre ou fixé à un mât supportant une antenne par exemple.

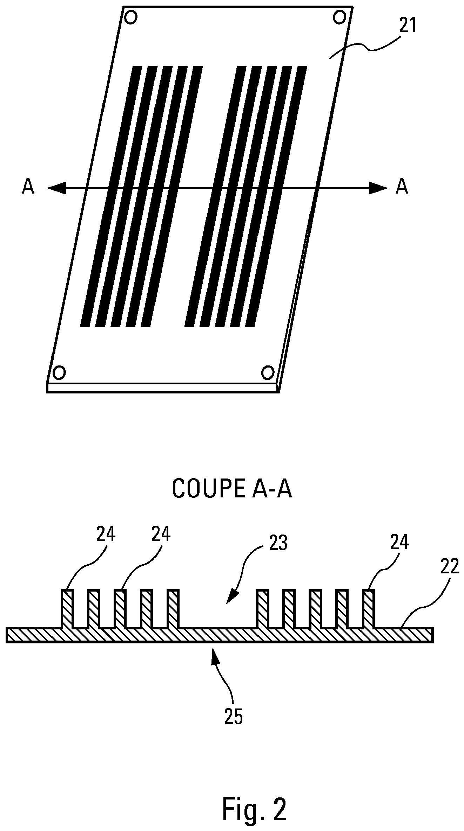

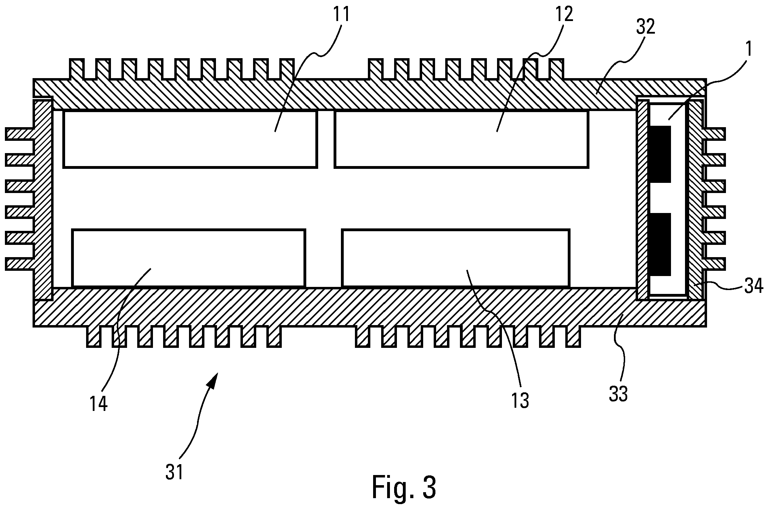

Pour assurer le bon fonctionnement des différents éléments du dispositif et notamment pour permettre l'évacuation de la chaleur dissipée par ces différents éléments, la structure du coffret est définie de façon à ce que le coffret lui-même se comporte comme un dissipateur. A cet effet, comme l'illustre les figures 2 et 3, les faces qui le constituent jouent avantageusement le rôle de support et de dissipateur pour les différents éléments du dispositif.

Pour ce faire chacune des faces 21 du coffret, latérale, supérieur ou inférieure, est constituée d'une plaque 22 faite d'un matériau conducteur de la chaleur, une plaque métallique par exemple, dont la paroi externe 23 présente une structure en relief permettant d'augmenter la surface de dissipation. Cette structure en relief peut être par exemple réalisée, comme l'illustre la coupe AA de la figure 2, sous la forme de cannelures 24 parallèles usinées en relief ou en creux dans l'épaisseur de la plaque. Cet ensemble de cannelures augmente avantageusement les capacités de convection thermique de chacune des plaques formant les faces du coffret et la transforme ainsi en radiateur.

Les plaques formant les faces du coffret présentent en outre des parois internes 25 lisses, au contact desquelles sont positionnés et maintenus les différents éléments du dispositif. Idéalement les différents éléments sont fixés sur les plaques de façon à ce que la chaleur qu'ils dégagent soit transférée de la manière la plus complète possible à la plaque qui leur sert de support. Ce contact peut en outre être avantageusement renforcé si lors du montage d'un élément du dispositif sur une des plaques, on interpose entre la surface de l'élément et la plaque une couche de pâte ou de mousse d'un matériau bon conducteur thermique. De la sorte, la dissipation thermique est entièrement assurée par convection et il est avantageusement possible de disposer d'un coffret étanche tout en assurant une température de fonctionnement satisfaisante aux éléments qui constituent le dispositif.

La figure 3 présente sous forme d'une coupe transversale, un exemple possible d'arrangement des éléments du dispositif dans le coffret. Dans cet arrangement pris à titre d'exemple, les sous-ensembles récepteurs 11, 12 et 14, ainsi que le sous-ensemble oscillateur local (OL) 13, sont fixés sur les faces supérieure 32 et inférieure 33, par l'intermédiaire de brides par exemple, de façon à assurer leur maintien ainsi que leur mise en contact thermique avec les plaques. Les sous-ensembles 16, 17 constituant le module numérique sont quant à eux montés sur une carte support (non représentée) de façon à être mis en contact avec un des faces latérales 34. Par soucis de simplification, les couches d'éléments conducteurs interposées entre les éléments et les laques correspondantes ne sont pas représentées sur la figure.

Le dispositif 31 ainsi constitué présente une structure avantageusement étanche, légère et compacte pouvant être montée sur une structure porteuse quelconque ou même posée à terre par l'intermédiaire de pieds ou de plots (non représentés sur la figure) directement montés sur le coffret.

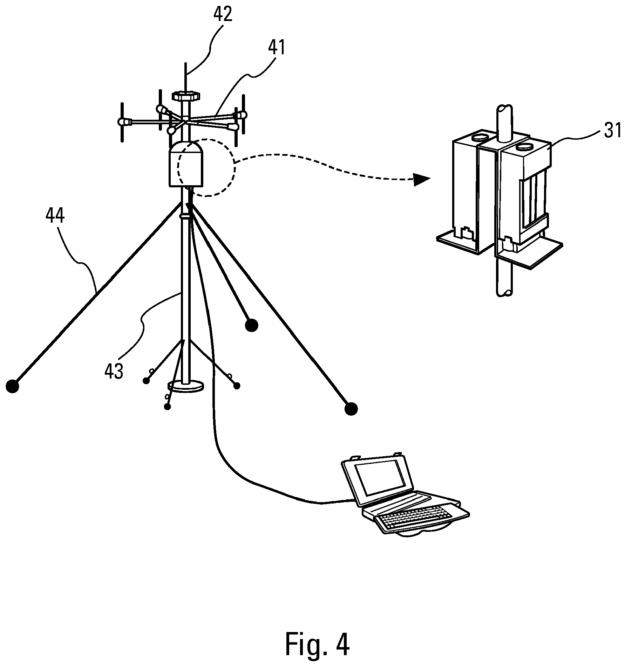

On s'intéresse à présent aux figures 4, 5 et 6 qui présentent trois exemples caractéristiques d'utilisation du dispositif selon l'invention pour constituer des systèmes mobiles de radio surveillance.

L'illustration de la figure 4 représente de manière schématique un système de radio surveillance mobile comportant une antenne déployable, constitué d'éléments rayonnants 41, 42 montés sur un mât 43, de type télescopique par exemple, maintenu de manière temporaire, pour la durée de la mission de surveillance, par un système de haubans 44. Dans cet exemple, le mât est un mât support d'antenne classique sur lequel est fixé par l'intermédiaire de moyens de fixation appropriés, le dispositif 31 selon l'invention. Le dispositif est raccordé aux éléments rayonnant par l'intermédiaire du sous-ensemble de commutation et à un pupitre opérateur au travers d'une liaison numérique déportée de type Ethernet par exemple. Suivant les contraintes opérationnelles le pupitre opérateur peut se résumer à un simple calculateur portable de type PC par exemple. L'ensemble ne nécessite alors aucune infrastructure, abri ou autre, pour sa mise en oeuvre et peut donc être transporté et déployé dans des zones relativement peu accessibles. L'alimentation électrique du dispositif peut en outre être fournie par une source de tension située au sol, un groupe électrogène par exemple, ou encore par une batterie accouplée au dispositif. On obtient ainsi avantageusement, grâce à la compacité et à la légèreté du dispositif selon l'invention, un système de surveillance complet facile à déplacer.

Cet avantage est par ailleurs, également présent dans le cas d'une configuration fixe (ou d'infrastructure) pour lesquelles l'utilisation d'un dispositif selon l'invention diminuent ainsi notablement les contraintes d'installation.

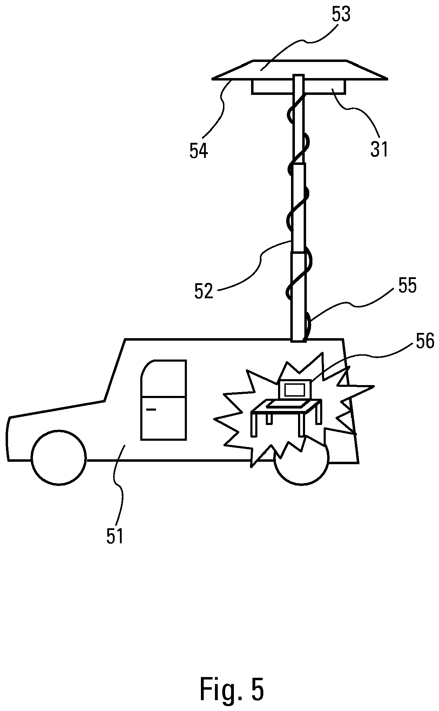

L'illustration de la figure 5 présente également un système de radio surveillance, comportant un dispositif selon l'invention, monté sur un véhicule 51. Dans cet exemple le véhicule est équipé d'un mât télescopique 52 classique supportant une plate-forme 54 dans un radôme. Sur cette plate-forme est installée une antenne 53 constituée d'éléments rayonnants. Les éléments rayonnants sont raccordés au dispositif 31 selon l'invention, qui est directement fixé sous la plateforme 54 et relié par une liaison numérique déportée 55 à un pupitre de contrôle 56 installé à l'intérieur du véhicule.

Comme on peut le constater au travers de ce deuxième exemple de mise en oeuvre, le dispositif selon l'invention permet, grâce à sa compacité et à son faible poids, de réaliser un système de surveillance complet dont l'installation à bord d'un véhicule nécessite très peu d'aménagement et est donc de ce fait peu coûteuse. En outre, dans la mesure où, du fait de sa structure, le dispositif consomme relativement peu d'énergie et ne nécessite qu'une source d'alimentation, l'alimentation électrique du dispositif peut par exemple être fournie par une simple batterie installée dans le véhicule.

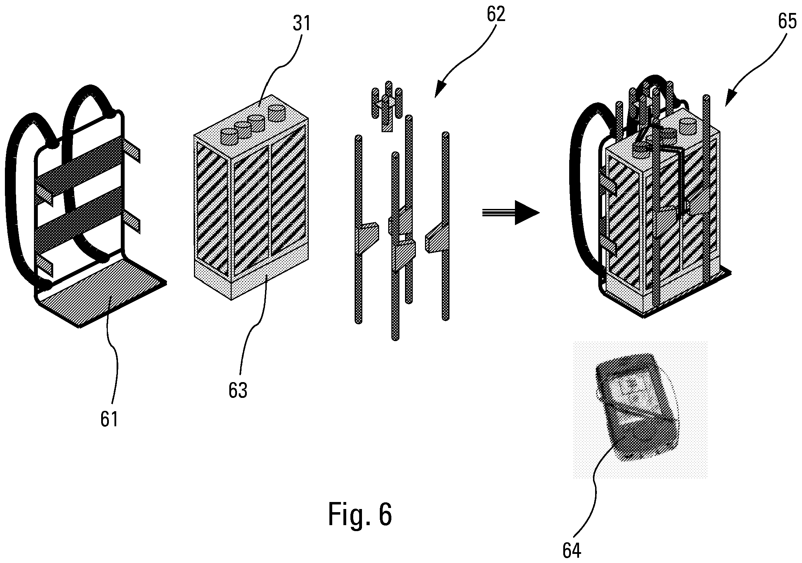

L'illustration de la figure 6 présente quant à elle un système de radio surveillance portatif 65, comportant un dispositif selon l'invention monté sur une structure d'accueil de portage 61 et équipé d'une antenne dédiée. Cette antenne peut être par exemple une antenne de goniométrie 62 ou une antenne spécifique directive. Equipé d'une batterie 63 permettant de lui fournir l'énergie nécessaire, le système de radio surveillance procure ainsi une complète autonomie à un opérateur, et assure l'intégralité des missions couvertes par une station fixe ou mobile. Dans de telles conditions d'utilisation, le pupitre opérateur peut être par exemple un PDA, 64, pour un affichage très synthétique ou un calculateur portable de type PC pour accéder à des fonctions plus évoluées. Un tel dispositif peut être utilisé, par exemple, dans le cas de la surveillance radioélectrique, pour un opérateur se déplaçant à pied, de la recherche d'un émetteur en approche final ou lorsqu'un véhicule peut être utilisé.

Les exemples de mise en oeuvre illustrés par les figures 4, 5 et 6, permettent en outre de mettre en évidence que le dispositif selon l'invention présente la caractéristique de permettre d'établir des liaisons courtes entre les éléments rayonnants de l'antenne et les sous-ensembles récepteurs ce qui a pour conséquence avantageuse de diminuer les pertes sur le signal reçu et donc d'augmenter la sensibilité du système.

Ces exemples montrent également la polyvalence du dispositif selon l'invention, qui peut assurer l'intégralité de ses missions dans de multiples configurations d'utilisation : fixe, transportable, mobile ou portative.

## Revendications

1. Dispositif compact de réception et de traitement pour système de radio surveillance large bande, comportant au moins:
- un ou deux modules récepteurs (11, 12) aptes à assurer la réception de signaux UHF/VHF,
- un module récepteur (14) aptes à assurer la réception de signaux HF,
- un module oscillateur local, OL, (13) chargé de la synthèse des oscillateurs locaux destinés aux modules récepteurs
- un module numérique (15) comportant:
- un sous-ensemble (16) assurant les fonctions de numérisation des signaux complexes délivrés par les modules de réception, à une fréquence d'échantillonnage Fₑ donnée ainsi que l'analyse spectrale du signal Reçu,
- un sous-ensemble (17) assurant les tâches d'acquisition de résultats ainsi que les tâches de séquencement et de gestion en temps réel des ressources constituées par les autres sous-ensembles, de façon à réaliser la tâche de radio surveillance demandée,
- un module de commutation (18) permettant d'aiguiller le signal reçu sur un module récepteur donné,
- un module de conversion d'énergie (19) chargé de produire à partir d'une source de tension externe unique les tensions d'alimentation nécessaires au fonctionnement de chacun des modules,
**caractérisé en ce que** :
les modules du dispositif étant intégrés dans un unique coffret étanche (31) ils sont agencés à l'intérieur dudit coffret de sorte que la chaleur dissipée par chacun des modules soit transmise par conduction aux parois du coffret et dissipée par convection vers l'extérieur par les parois du coffret, le refroidissement des modules étant assuré uniquement par ce moyen, et **en ce que** :
les modules sont fixés sur les faces internes des parois (32, 33, 34) de façon à établir une continuité thermique entre ces modules et le coffret.

2. Dispositif selon la revendication 1, dans lequel on interpose entre la surface du module et la paroi sur laquelle il est fixé une couche de matériau bon conducteur thermique.

3. Dispositif selon l'une des revendications 1 à 2, dans lequel les parois externes des faces latérales supérieure (32) et inférieure (33) du coffret présentent une structure en relief pour augmenter la surface de dissipation.

4. Dispositif selon la revendication 2, dans lequel la structure en relief est réalisée sous la forme de cannelures parallèles (24) usinées en relief ou en creux dans l'épaisseur de la paroi.

5. Système de radio surveillance mobile comportant un dispositif compact de réception et de traitement selon l'une quelconque des revendications précédentes, associé à une antenne déployable, constitué d'éléments rayonnants (41, 42) montés sur un mât télescopique (43), maintenu par un système de haubans (44).

6. Système de radio surveillance mobile comportant un dispositif compact de réception et de traitement selon l'une quelconque des revendications 1 à 4, associé à une antenne (53) constituée d'éléments rayonnants, l'ensemble étant monté sur une plateforme (54) équipée d'un radôme, ladite plateforme étant fixée à l'extrémité d'un mât télescopique (52) monté sur un véhicule (51).

7. Système de radio surveillance portatif, comportant un dispositif compact de réception et de traitement selon l'une quelconque des revendications 1 à 4, monté sur une structure d'accueil de portage (61) et équipé d'une antenne goniométrie (62).

## Patentansprüche

1. Kompakte Empfangs- und Verarbeitungsvorrichtung für ein Breitband-Funküberwachungssystem, die wenigstens Folgendes umfasst:
- ein oder zwei Empfängermodule (11, 12) zum Gewährleisten des Empfangs von UHF/VHF-Signalen,
- ein Empfängermodul (14) zum Gewährleisten des Empfangs von HF-Signalen,
- ein Lokaloszillatormodul OL (13) mit der Aufgabe, für die Empfängermodule bestimmte Lokaloszillatoren zu synthetisieren,
- ein digitales Modul (15), das Folgendes umfasst:
- eine Unterbaugruppe (16), die die Funktionen des Digitalisierens von von den Empfangsmodulen gelieferten komplexen Signalen mit einer gegebenen Abtastfrequenz Fₑ sowie des Spektralanalysierens des empfangenen Signals gewährleistet,
- eine Unterbaugruppe (17) zum Gewährleisten der Aufgaben des Erfassens von Resultaten sowie der Aufgaben des Sequenzierens und des Verwaltens, in Echtzeit, der von den anderen Unterbaugruppen gebildeten Ressourcen, um die verlangte Funküberwachungsaufgabe zu realisieren,
- ein Schaltmodul (18) zum Leiten des empfangenen Signals zu einem gegebenen Empfängermodul,
- ein Energieumwandlungsmodul (19) mit der Aufgabe, auf der Basis einer einzigen externen Spannungsquelle die für den Betrieb jedes der Module benötigten Versorgungsspannungen zu erzeugen,
**dadurch gekennzeichnet, dass**:
die in einem einzigen dichten Gehäuse (31) integrierten Module der Vorrichtung im Innern des Gehäuses so ausgestattet sind, dass die von jedem der Module abgestrahlte Wärme durch Leitung zu den Wänden des Gehäuses übertragen und durch Konvektion zur Außenseite durch die Wände des Gehäuses abgeführt wird, wobei die Kühlung der Module nur durch dieses Mittel gewährleistet wird, und dadurch, dass:
die Module an den Innenflächen der Wände (32, 33, 34) befestigt sind, um thermische Kontinuität zwischen diesen Modulen und dem Gehäuse herzustellen.

2. Vorrichtung nach Anspruch 1, bei der eine gut wärmeleitende Materialschicht zwischen der Fläche des Moduls und der Wand, an der es befestigt ist, vorgesehen ist.

3. Vorrichtung nach einem der Ansprüche 1 bis 2, bei der die Außenwände der oberen (32) und unteren (33) Seitenflächen des Gehäuses eine Reliefstruktur aufweisen, um die Ableitungsfläche zu vergrößern.

4. Vorrichtung nach Anspruch 2, bei der die Reliefstruktur in Form von parallelen Rillen (24) realisiert ist, die in das Relief oder in die Aushöhlung in der Dicke der Wand ausgearbeitet sind.

5. Mobiles Funküberwachungssystem, das eine kompakte Empfangs- und Verarbeitungsvorrichtung nach einem der vorherigen Ansprüche umfasst, assoziiert mit einer entfaltbaren Antenne, gebildet von Strahlungselementen (41, 42), die an einem durch ein Verankerungssystem (44) gehaltenen teleskopischen Mast (43) montiert sind.

6. Mobiles Funküberwachungssystem, das eine kompakte Empfangs- und Verarbeitungsvorrichtung nach einem der Ansprüche 1 bis 4 umfasst, assoziiert mit einer von Strahlungselementen gebildeten Antenne (53), wobei die Baugruppe an einer mit einem Radom ausgestatteten Plattform (54) montiert ist, wobei die Plattform am Ende eines an einem Fahrzeug (51) montierten teleskopischen Masts (52) befestigt ist.

7. Tragbares Funküberwachungssystem, das eine kompakte Empfangs- und Verarbeitungsvorrichtung nach einem der Ansprüche 1 bis 4 umfasst, montiert an einer Tragaufnahmestruktur (61) und ausgestattet mit einer Goniometrieantenne (62).

## Claims

1. A compact reception and processing device for wideband radio monitoring system, comprising at least:
- one or two receiver modules (11, 12) able to receive UHF/VHF signals,
- a receiver module (14) able to receive HF signals,
- a LO local oscillator module (13) responsible for synthesizing the local oscillators intended for the receiver modules,
- a digital module (15) comprising:
- a subassembly (16) handling the digitization functions for the complex signals delivered by the reception modules, at a given sampling frequency Fₑ, and the spectral analysis of the received signal,
- a subassembly (17) handling the result acquisition tasks and the real time sequencing and management tasks for the resources comprising the other subassemblies, so as to perform the requested surveillance radio task,
- a switching module (18) for switching the received signal to a given receiver module,
- an energy conversion module (19) responsible for producing from a single external voltage source the power supply voltages needed to operate each of the modules,
**characterized in that**:
since the modules of the device are integrated in a single sealed box (31), they are arranged inside said box so that the heat dissipated by each of the modules is transmitted by conduction to the walls of the box and dissipated by convection towards the outside by the walls of the box, the cooling of the modules being handled only by this means, and **in that**:
the modules are fixed to the internal faces of the walls (32, 33, 34) so as to establish thermal continuity between these modules and the box.

2. The device as claimed in claim 1, in which a layer of good thermal conductive material is inserted between the surface of the module and the wall on which it is fixed.

3. The device as claimed in one of claims 1 to 2, in which the external walls of the top (32) and bottom (33) lateral faces of the box present a relief structure to increase the dissipation area.

4. The device as claimed in claim 2, in which the relief structure is produced in the form of parallel grooves (24) machined in relief or hollowed out of the thickness of the wall.

5. A mobile radio monitoring system comprising a compact reception and processing device as claimed in any one of the preceding claims, associated with an extendable antenna, consisting of radiating elements (41, 42) mounted on a telescopic mast (43), maintained by a system of guy ropes (44).

6. A mobile radio monitoring system comprising a compact reception and processing device as claimed in any one of claims 1 to 4, associated with an antenna (53) consisting of radiating elements, the assembly being mounted on a platform (54) fitted with a radome, said platform being fixed to the end of a telescopic mast (52) mounted on a vehicle (51).

7. A portable radio monitoring system, comprising a compact reception and processing device as claimed in any one of claims 1 to 4, mounted on a carrying structure (61) and equipped with a goniometry antenna (62).
